Europäisches Patentamt

European Patent Office

Office européen des brevets

(19)

(11) Veröffentlichungsnummer: **0 220 189**
**B1**

(12)

# EUROPÄISCHE PATENTSCHRIFT

(45) Veröffentlichungstag der Patentschrift:
29.03.89

(21) Anmeldenummer: 85903985.1

(22) Anmeldetag: 06.08.85

(86) Internationale Anmeldenummer:
PCT/DE 85/00264

(87) Internationale Veröffentlichungsnummer:
WO 86/01233 (27.02.86 Gazette 86/05)

(51) Int. Cl.⁴: **C 23 G 1/36,** B 01 D 17/06,
B 01 D 13/00

(54) **VERFAHREN ZUR REGENERATION VON REINIGUNGS- UND ENTFETTUNGSBÄDERN UND VORRICHTUNG ZUR DURCHFÜHRUNG DES VERFAHRENS.**

(30) Priorität: 11.08.84 DE 3429612
09.10.84 DE 3437055
12.11.84 DE 3444074
26.04.85 DE 3515095
20.07.85 DE 3525963

(43) Veröffentlichungstag der Anmeldung:
06.05.87 Patentblatt 87/19

(45) Bekanntmachung des Hinweises auf die Patenterteilung:
29.03.89 Patentblatt 89/13

(84) Benannte Vertragsstaaten:
AT BE CH DE FR GB IT LI LU NL SE

(56) Entgegenhaltungen:
EP-A-0 041 480
DE-A-2 345 353
DE-A-2 617 996
DE-A-2 627 964
DE-A-2 644 744
DE-A-3 031 773
FR-A-2 243 025
GB-A-2 045 803

Galvanotechnik, Band 71, Nr. 8, August 1980,
Saulgau (DE), Chr.Rossmann: "Untersuchungen zur
Entsorgung und Regenerierung von alkalischen
Entfettungslösungen", Seiten 824-833

(73) Patentinhaber: RENZLER, Edgar, Siegstrasse 2,
D-5000 Köln 40 (DE)

(72) Erfinder: RENZLER, Edgar, Siegstrasse 2, D-5000
Köln 40 (DE)

(74) Vertreter: Klöpsch, Gerald, Dr.- Ing., An Gross St.
Martin 6, D-5000 Köln 1 (DE)

(56) Entgegenhaltungen: (Fortsetzung)
Die Akte enthält technische Angaben, die nach
dem Eingang der Anmeldung eingereicht wurden
und die nicht in dieser Patentschrift enthalten sind.

## Beschreibung

Die Erfindung bezieht sich auf ein Verfahren zur Regeneration von verbrauchten Reinigungs- und Entfettungsbädern in einer mit Gleichstrom betriebenen Elektrolysezelle und auf eine Vorrichtung zur Durchführung des Verfahrens.

Bei dem Reinigen und gleichzeitigen Entfetten von Formteilen aus metallischen Werkstoffen bzw. Kunststoffen, die anschließend mit einem Anstrich versehen, verzinkt oder galvanisch bzw. im Elektrotauchverfahren beschichtet werden sollen, fallen nach einem gewissen Zeitablauf verbrauchte Bäder an, die neben Anteilen der für das Reinigen und Entfetten wirksamen Bestandteilen emulgierte Öle und Fette und dispergierte Schmutzstoffe enthalten und aus den nachstehenden Gründen aufgearbeitet werden müssen.

Reinigungs- und Entfettungsbäder sind bekanntlich wäßrige Flüssigkeiten, die in der Hauptsache Natriumhydroxid, Kaliumhydroxid, Carbonate, Phosphate, Silikate, Netzmittel, Emulgatoren und Dispergiermittel enthalten. Außerdem können in den Bädern, soweit es die der Reinigung und Entfettung folgenden Verfahren der Oberflächenbehandlung erfordern, Nitride, Fluoride und komplexe Salze vorhanden sein.

Die Wirkung der Reinigungsflüssigkeiten beruht vor allem auf einer Peptisierung und Dispergierung der an der Oberfläche der Werkstücke oder Formteile vorhandenen Verunreinigungen, insbesondere der anhaftenden Öle und Fette, der anschließenden Stabilisierung der Emulsion sowie der Verseifung der verseifbaren Fette. Bei den in den Flüssigkeiten vorhandenen typischen Emulgatoren ist in Abhängigkeit von der Zusammensetzung der zu lösenden Fette und Öle bei diesen Vorgängen das hydrophile-lipophile Gleichgewicht maßgebend.

Da den beschriebenen Reinigungs- und Entfettungsflüssigkeiten meist auch noch biologisch schlecht abbaubare Sulfonate, Netzmittel und Tenside zugesetzt werden, handelt es sich immer um umweltfeindliche Flüssigkeiten, deren Entsorgung, nachdem ihre Reinigungskraft erschöpft ist, nur unter Einsatz besonderer Mittel und damit verbundener hoher Kosten möglich ist.

Bei den verbrauchten Reinigungs- und Entfettungsbädern handelt es sich um Emulsionen, d.h. um disperse Systeme von zwei nicht oder nur geringfügig miteinander mischbaren Flüssigkeiten und Phasen, von denen die eine Phase in der anderen Phase feinverteilt ist. Typische Beispiele hierfür sind die W/O- und O/W-Emulsionen, d.h. Wasser-Öl-Systeme, wobei sowohl das Wasser als auch das Öl die innere Phase bilden können.

Infolge des üblichen "Nachschärfens" der Reinigungsbäder, d.h. der fortlaufenden Zugabe frischer Salze zu den im Gebrauch befindlichen Bädern, werden weitere Tenside, Netzmittel und Emulgatoren der Lösung zugeführt, so daß die kritische Mizellenkonzentration teilweise weit überschritten wird und damit äußerst beständige Aggregate gebildet werden, deren Spaltung später äußerst schwierig ist.

Da aber bekanntlich nur geringe Mengen an freien, gelösten oder emulgierten Ölen in die Kanalisation abgeleitet werden dürfen, ist eine Aufarbeitung der verbrauchten Reinigungs- und Entfettungsbäder unter Spaltung der Emulsionen bei einem pH-Wert von etwa 4,5 notwendig. Mit dieser Maßnahme werden jedoch gleichzeitig alle wirksamen Bestandteile der Bäder zerstört. Hinzukommt, daß es bei dieser Art der Aufbereitung der Bäder notwendig ist, zum Entsorgen der verbrauchten Flüssigkeiten die gesamte Anlage zum Reinigen und Entfetten der Werkstoffe abzuschalten, so daß ein kontinuierlicher Betrieb der Reinigungs- und Entfettungsanlage nicht möglich ist. Der Regeneration der verbrauchten Reinigungs- und Entfettungsbäder kommt somit aus zahlreichen Gründen eine besondere Bedeutung zu.

Die bisher bekannten Verfahren zur Aufarbeitung von verbrauchten Reinigungs- und Entfettungsbädern sind zwar mehr oder weniger geeignet, die emulgierten Öle und Fette aus diesen Bädern abzuscheiden, doch gelingt es bisher weder, die umweltfeindlichen Badzusätze aus den Bädern vollständig zu entfernen, noch die wirksamen Bestandteile der Bäder, die mit den Ölen und Fetten abgeschieden werden, bei der Aufarbeitung der Bäder zur Wiederverwertung zurückzugewinnen. Darüber hinaus ist als weiterer Nachteil der bekannten Verfahren die Notwendigkeit zu nennen, daß die Anlage zum Reinigen und Entfetten der Formteile bei der Aufarbeitung der Bäder abgeschaltet werden muß.

Der Erfindung liegt die Aufgabe zugrunde, die geschilderten Schwierigkeiten auszuschalten und einen möglichst kontinuierlichen Betrieb zur Reinigung und Entfettung von Werkstücken und Formteilen aus Metallen, Kunststoffen o.dgl. zu gewährleisten, wobei es gerade auf dem Gebiet der verbrauchten Reinigungs- und Entfettungsbäder einen ganz erheblichen Fortschritt bedeuten würde, wenn es gelänge, mittels Elektrokoagulation und Elektroflotation die Entsorgung der verbrauchten Flüssigkeiten dadurch überflüssig zu machen, daß diese in fortschrittlichem und energetisch vertretbarem Umfange zurückgewonnen werden könnten.

Es war demzufolge erfindungsgemäß die Aufgabe zu lösen, ein Verfahren zur Regeneration aufgebrauchter Bäder zur Reinigung und Entfettung verfügbar zu machen, mit dem es gelingt, sowohl die Flüssigkeiten der eingangs beschriebenen Art ohne die bekannten Schwierigkeiten zurückzugewinnen als auch zu erreichen, daß die tatsächlich wertvollen Bestandteile der Emulsionen nicht gleichzeitig mit dem Wasser oder den Ölen und Fetten ohne Möglichkeit ihrer Rückgewinnung ausgetragen werden, zumal sie, obwohl für die weitere Anwendung wertvoll, ein echtes Umweltproblem darstellen.

Die Lösung dieser Aufgabe der Erfindung ist ein Verfahren zur Regeneration neutraler bis alkalischer Reinigungs- und Entfettungsbäder in einer mit Gleichstrom betriebenen Elektrolysezelle, das dadurch gekennzeichnet ist, daß Seifen und emulgierte Bestandteile der Bäder in einer Zelle mit mindestens einem Paket beständiger Elektroden, wobei innerhalb des Pakets beständiger Elektroden eine oder mehrere durch Influenz lösliche Metalleinlagen angeordnet sind, im neutralen bis alkalischen Bereich bei einem Stromverbrauch von 0,1 bis 4 Ah/dm$^3$ und einer entsprechend abgestimmten ausreichenden Verweilzeit koaguliert und flotiert und gegebenenfalls gebildete Feststoffe abfiltriert werden.

Dieses Verfahren gemäß der Erfindung ist mit dem Verfahren, das in der DE-OS-2 212 959 beschrieben ist und ein Verfahren zum Trennen von wasserunlöslichen Stoffen, insbesondere Ölen, und Wasser betrifft, nicht vergleichbar; denn bei dem bekannten Verfahren handelt es sich um einen Flockungsvorgang bei pH-Werten zwischen 6,5 und 9,5, bei dem an der Anode der in der genannten Offenlegungsschrift erläuterten Vorrichtung Hydroxide gebildet werden, die an ihrer Oberfläche die nicht-wasserlöslichen Stoffe adsorbieren.

Dieses bekannte Verfahren ist zur Rückgewinnung der alkalischen Lösungen nicht geeignet, da das erfindungswesentliche Merkmal der Flotation mit dieser Anordnung nicht durchführbar ist. Für das erfindungsgemäße Verfahren ist ebenfalls ein ausreichend hohes elektrisches Feld von Bedeutung, damit durch Abstreifen der diffusen Doppelschicht der emulgierten Teilchen die initiale Koagulation erleichtert wird und anschließend die gebildeten Gasblasen an ihrer Oberfläche koagulierte Öle und Fette adsorbieren und austragen können. Die bereits in den Reinigungsflüssigkeiten enthaltenen grenzflächenaktiven Stoffe unterstützen diese Mikroflotation und die dabei destabilisierten Feststoffteilchen werden mittels Schaumflotation ausgetragen oder bei hohen Feststoffanteilen später filtriert.

Das Verfahren gemäß der Erfindung kann sowohl kontinuierlich als auch diskontinuierlich durchgeführt werden, wobei der kontinuierlichen Verfahrensführung eine besondere Bedeutung zukommt, da hierbei die Reinigung und Entfettung der Werkstücke bzw. Formteile in einer für das Waschen und Entfetten geeigneten Anlage nicht unterbrochen werden muß.

Zweckmäßig werden die aus der Reinigungs- und Entfettungsanlage abgezogenen, verbrauchten Flüssigkeiten einer Vorfiltration unterworfen, bevor sie der Elektrolysezelle zugeführt werden. In dieser kann entweder zunächst nur koaguliert und die Flotation dann in einer nachfolgenden Zelle durchgeführt werden, oder es werden Koagulation und Flotation direkt in der gleichen Zelle durchgeführt, wobei dann jeweils eine Beruhigungs- und Absetzkammer nachgeschaltet werden sollte.

Erfindungsgemäß können als beständige Elektroden beispielsweise solche aus Graphit, Platin, Titan, platiniertem Titan oder Edelstahl verwendet werden, während sich als durch Influenz lösliche Metalleinlage mindestens ein ein Hydroxid bildendes Metall, insbesondere eine Eisen- oder Aluminiumplatte eignet.

Zur Unterstützung der Koagulation ist es notwendig, die abgeschiedene Menge der Koagulationsmittels zu erhöhen, indem mindestens eine zwischengeschaltete lösliche Metalleinlage in den Paketen der Elektroden vorgesehen wird.

Beim Verfahren gemäß der Erfindung ist es von Vorteil, die Bäder bei pH-Werten im Bereich von 6,5 bis 12,6, einem Stromverbrauch von 0,1 bis 4 Ah/dm$^3$ und einer Verweilzeit von 2 bis 500 min zu regenerieren und die Öle, Fette und Schmutzstoffe zu koagulieren und zu flotieren. Vorzugsweise wird bei einer Verweilzeit von 5 bis 40 min gearbeitet. Die Regeneration kann bei pH-Werten im Bereich von 8,5 bis 10 und einer Verweilzeit von 5 bis 120 min bei einem Stromverbrauch von 0,1 bis 2 Ah/dm$^3$ durchgeführt werden.

Zweckmäßig sollte bei dem Verfahren gemäß der Erfindung darauf geachtet werden, daß das Flächenverhältnis der beständigen Elektroden zur löslichen Metalleinlage 1 : 0,05 bis 1 : 100, vorzugsweise 1 : 1 bis 1 : 20 und das Verhältnis des Flüssigkeitsinhaltes der Elektrolysezelle zu dem der Reinigungs- und Entfettungsanlage 1 : 0,5 bis 1 : 100, vorzugsweise 1 : 5 bis 1 : 60, insbesondere 1 : 20 beträgt. In jedem Falle ist es von Vorteil, mit einer zeitlichen Änderung der Gleichstromrichtung von 5 bis 3600 sec zu arbeiten.

Im Rahmen der Erfindung ist ohne grundsätzliche Änderung des wesentlichen Erfindungsgedankens eine Abwandlung des Verfahrens auch dahingehend möglich, das die Metalleinlage aufweisende Elektrodenpaket direkt in eine Reinigungs- und Entfettungsanlage einzubauen. In diesem Falle sollte das Verhältnis der einander zugewandten Elektrodenflächen zur Flüssigkeitsoberfläche dieser Anlage 1 : 0,5 bis 1 : 100, vorzugsweise 1 : 2 bis 1 : 20, besonders bevorzugt 1 : 10 bis 1 : 15 betragen.

Das Verfahren gemäß der Erfindung hat den großen Vorteil, daß aus den Emulsionen sowohl der Koagulant als auch die Gase in solchen Mengen abgeschieden werden, daß sowohl die koagulierten Fett- und Ölpartikel als auch die Schmutzstoffe an der Oberfläche der Zelle aufschäumen, während die wertvollen Bestandteile der Emulsionen wenig aufschäumen und somit auch nicht aus der Zelle herausgetragen werden. Insgesamt bringt das Verfahren gemäß der Erfindung erheblichen technischen Fortschritt insbesondere bei der Aufbereitung verbrauchter Reinigungs- und Entfettungsbäder aus der gewerblichen und industriellen Reinigung von Metall- und Kunststoffteilen; denn erstmals kann die gleiche Reinigungs- und Entfettungsflüssigkeit mehrmals verwendet und gleichzeitig die erhebliche Umweltbelastung vermieden bzw. auf ein Minimum reduziert werden.

Koagualtion und Flotation können erfindungsgemäß so durchgeführt werden, daß in der Zelle entweder zunächst nur koaguliert und in einer nachgeschalteten Zelle dann flotiert wird, doch können Koagulation und Flotation auch direkt in der gleichen Zelle erfolgen, wobei jeweils eine Beruhigungs- und Absetzkammer und eine Filtration zur Rückgewinnung der Tenside nachgeschaltet werden sollte.

Vorrichtungen zur Durchführung des Verfahrens gemäß der Erfindung sind in den Abbildungen dargestellt, und an diesen soll die Erfindung nachstehend weiter erläutert werden.

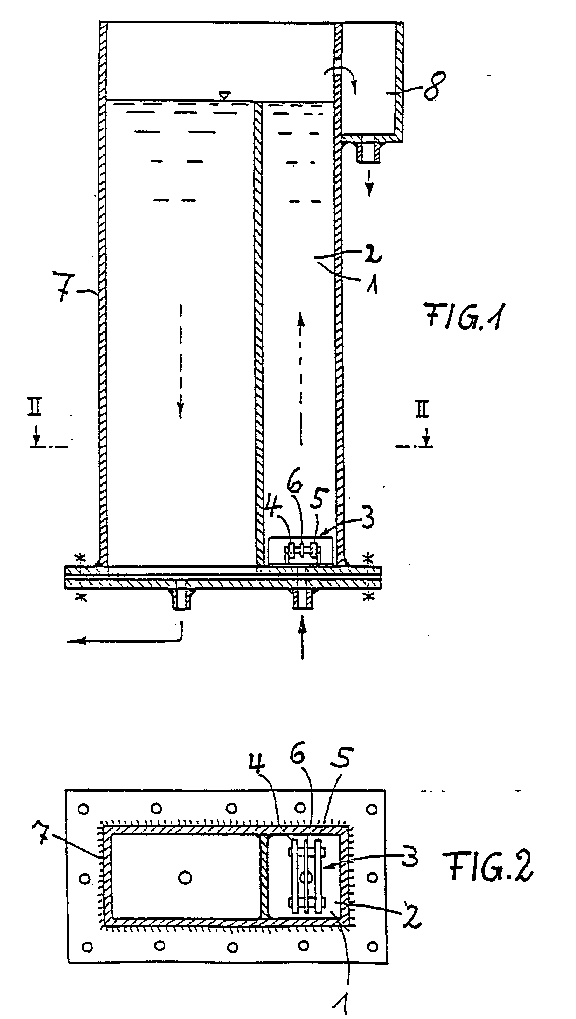

Eine Vorrichtung zur Durchführung des Verfahrens gemäß der Erfindung ist in Fig. 1 im Schnitt dargestellt. Diese Vorrichtung besteht im wesentlichen aus einem Elektrokoagulator 2 mit darin angeordnetem Paket 3 der beständigen Elektroden 4 und 5 mit zwischengeschalteter Metalleinlage 6. Der Elektrokoagulator 2 befindet sich in einem Reaktor 7 mit Überlaufsystem 8. Der mit dem Reaktor 7 zusammengefaßte Elektrokoagulator 2 ist in Fig. 2 im Schnitt nach Linie II - II von Fig. 1 wiedergegeben. In einer vergleichbar konstruierten, nachgeschalteten Vorrichtung befindet sich dann der Elektroflotator 1, der in diesem Zusammenhang aber nicht dargestellt ist.

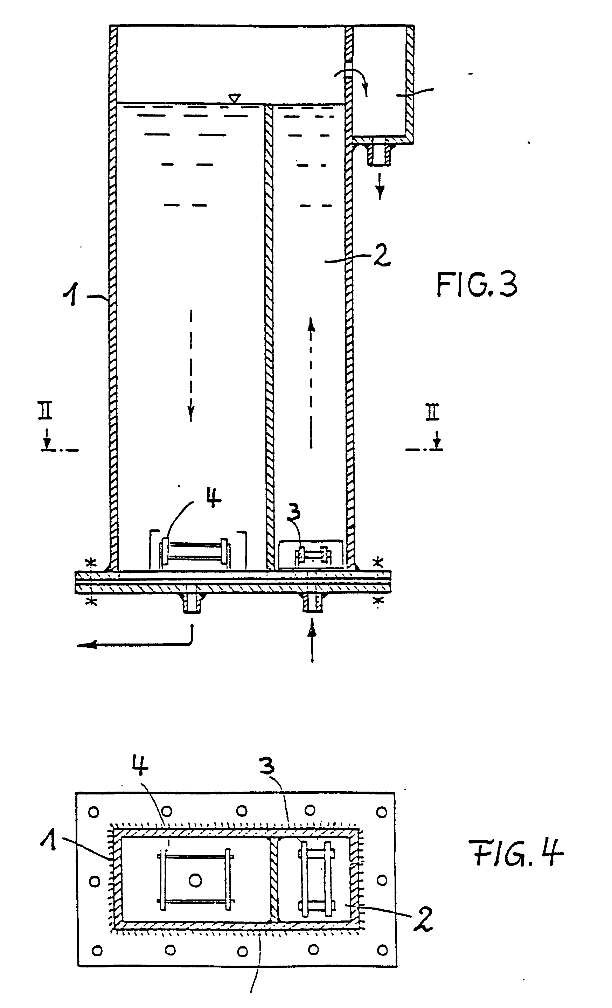

Eine weitere Vorrichtung zur Durchführung des Verfahrens gemäß der Erfindung ist in Fig. 3 im Schnitt dargestellt. Diese Variante besteht im wesentlichen aus einem Elektrokoagulator 2 mit direkt nachgeschaltetem Elektroflotator 1, die beide in einem Reaktor mit Überlaufsystem zusammengefaßt sind. In den Elektrokoagulator 2 ist ein Elektrodenpaket 3 aus einem Hydroxid bildenden Metall und in den Elektroflotator 1 ein Elektrodenpaket 4 aus beständigen Elektroden integriert. Der Schnitt dieser Vorrichtung nach Linie II - II ist in Fig. 4 wiedergegeben.

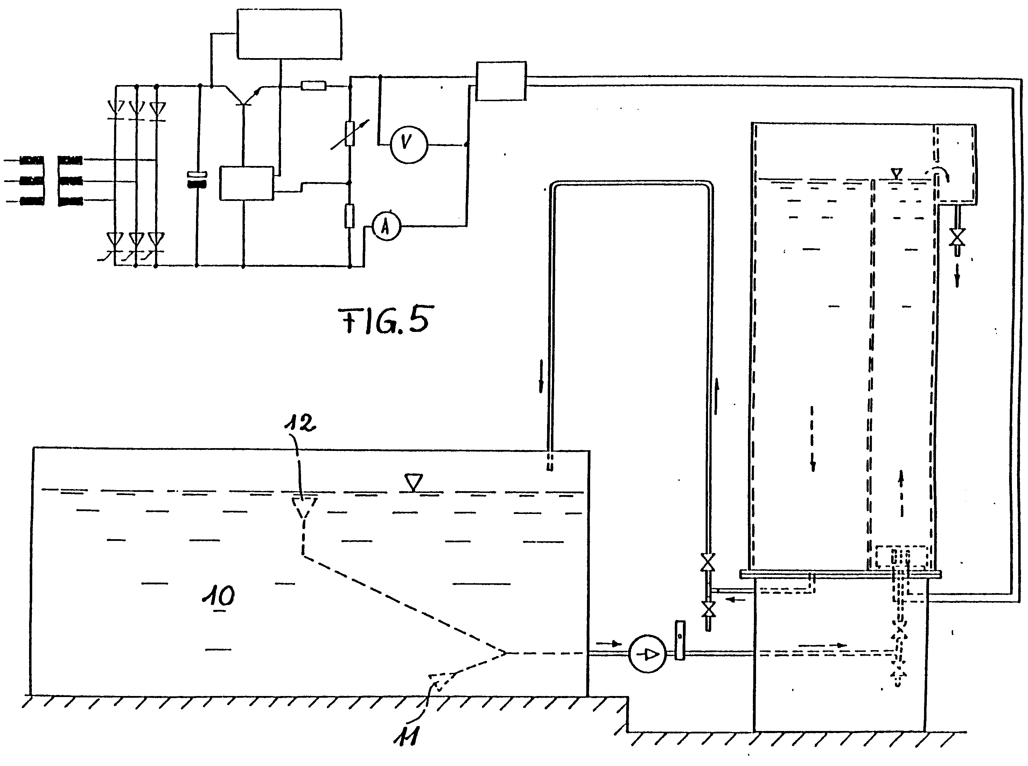

Fig. 5 stellt eine Gesamtansicht der Vorrichtung zur Durchführung des Verfahrens gemäß der Erfindung dar, wobei der Übersichtlichkeit halber die im Reaktor integrierten Elektroflotator und -koagulator einschließlich Überlaufsystem nicht mehr detailliert sind. Es wird vielmehr speziell die Reinigungs- und Entfettungsanlage 10 mit Bodenabzug 11 und Oberflächenabzug 12 näher erläutert. Aus der Gesamtdarstellung der Vorrichtung einschließlich der nicht näher gekennzeichneten Teile, wie Gleichrichter mit Regelung und Pulsationseinrichtung, Ampèremeter, Voltmeter, Pumpe, Rotameter und Zu- bzw. Abführungsleitungen sowie zur Verfahrensausführung erforderliche Ventile, ist für den Fachmann die Durchführung des Verfahrens gemäß der Erfindung in der geschilderten Anlage ohne zusätzliche Erläuterungen verständlich und nacharbeitbar.

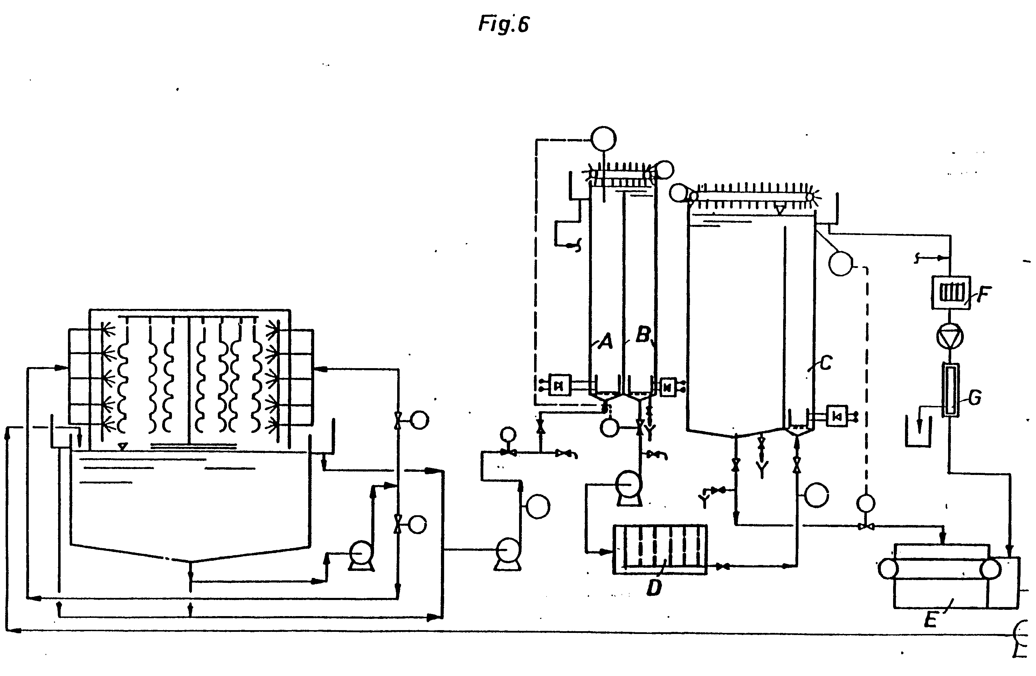

Fig. 6 stellt ein vereinfachtes, keine Vorrichtungsdetails aufweisendes Fließschema des Verfahrens gemäß der Erfindung am Beispiel einer Reinigungs- und Entfettungsanlage mit nachgeschalteter zweistufiger Regeneration des Reinigungs- und Entfettungsbades dar. Hierbei wird in der ersten Stufe der Regeneration eine Vorkoagulation mit Hydroxide bildenden Elektrodenwerkstoffen in der Koagulationskammer B und eine Flotation der Öle, Fette und Schmutzstoffe in der Flotationskammer A vorgenommen. Anschließend wird nach Filtration der Flüssigkeiten in der zweiten Regenerationsstufe eine kombinierte Hauptkoagulation und -flotation in der Zelle C durchgeführt. Die jeweils nachgeschalteten Filtereinheiten sind mit D und E bezeichnet und zur Rückgewinnung der Tenside ist ein mit F bezeichneter Schaumbrecher und eine mit G bezeichnete Ultrafiltration oder Feinfiltration eingezeichnet.

**Patentansprüche**

1. Verfahren zur Regeneration neutraler bis alkalischer Reinigungs- und Entfettungsbäder in einer mit Gleichstrom betriebenen Elektrolysezelle, dadurch gekennzeichnet, daß Seifen und emulgierte Bestandteile der Bäder in einer Zelle mit mindestens einem Paket beständiger Elektroden, wobei innerhalb des Paketes beständiger Elektroden eine oder mehrere durch Influenz lösliche Metalleinlagen angeordnet sind, im neutralen bis alkalischen Bereich bei einem Stromverbrauch von 0,1 bis 4 Ah/dm$^3$ und einer entsprechend abgestimmten ausreichenden Verweilzeit koaguliert und flotiert und gegebenenfalls gebildete Aggregate und Agglomerate abfiltriert werden.

2. Verfahren nach Anspruch 1, dadurch gekennzeichnet, daß durch eine zwischengeschaltete lösliche Metalleinlage in den Paketen der Elektroden infolge Erhöhung der abgeschiedenen Menge des Koagulationsmittels die Koagulation unterstützt wird.

3. Verfahren nach Anspruch 1 oder 2, dadurch gekennzeichnet, daß bei pH-Werten im Bereich von 6,5 bis 12,6, einem Stromverbrauch von 0,1 bis 4 Ah/dm$^3$ und einer Verweilzeit von 2 bis 500 min, vorzugsweise von 5 bis 360 min koaguliert und flotiert wird.

4. Verfahren nach Anspruch 1 bis 3, dadurch gekennzeichnet, daß als Metalleinlage innerhalb des Paketes beständiger Elektroden mindestens ein ein Hydroxid bildendes Metall verwendet wird, insbesondere eine Aluminiumplatte oder eine Eisenplatte.

5. Verfahren nach Anspruch 1 bis 4, dadurch gekennzeichnet, daß die Regeneration bei pH-Werten im Bereich von 8,5 bis 10 und einer Verweilzeit von 5 bis 120 min bei einem Stromverbrauch von 0,1 bis 2 Ah/dm$^3$ durchgeführt wird.

6. Verfahren nach Anspruch 1 bis 5, dadurch gekennzeichnet, daß das Flächenverhältnis der beständigen Elektroden zur löslichen Metalleinlage 1 : 0,05 bis 1 : 100, vorzugsweise 1 : 1 bis 1 : 20 beträgt.

7. Verfahren nach Anspruch 1 bis 6, dadurch gekennzeichnet, daß das Verhältnis des Flüssigkeitsinhaltes der Elektrolysezelle zu dem der Reinigungs- und Entfettungsanlage 1 : 0,5 bis 1 : 100, vorzugsweise 1 : 5 bis 1 : 60, insbesondere 1 : 20 beträgt.

8. Verfahren nach Anspruch 1 bis 7, dadurch gekennzeichnet, daß mit einer zeitlichen Änderung der Gleichstromrichtung von 5 bis 3600 sec gearbeitet wird.

9. Verfahren nach Anspruch 1 bis 8, dadurch gekennzeichnet, daß bei direktem Einbau des die Metalleinlage aufweisenden Elektrodenpakets in eine Reinigungs- und Entfettungsanlage das Verhältnis der einander zugewandten Elektrodenflächen zur Flüssigkeitsoberfläche dieser Anlage 1 : 0,5 bis 1 : 100, vorzugsweise 1 : 2 bis 1 : 20, besonders bevorzugt 1 : 10 bis 1 : 15 beträgt.

10. Vorrichtung zur Durchführung des Verfahrens nach Anspruch 1 bis 9, gekennzeichnet im wesentlichen durch einen Elektrokoagulator (1) mit integriertem oder nachgeschaltetem Elektroflotator (2) mit darin angeordnetem Paket (3) der beständigen Elektroden (4, 5) mit zwischengeschalteter Metalleinlage (6).

11. Vorrichtung nach Anspruch 10, dadurch gekennzeichnet, daß der Elektrokoagulator (1) und/oder der Elektroflotator (2) in einen Reaktor (7) mit Überlaufsystem (8) integriert und gegebenenfalls ein Filtersystem nachgeschaltet ist.

12. Vorrichtung nach Anspruch 10 oder 11, gekennzeichnet durch eine der Elektrolysezelle nachgeschaltete Beruhigungszelle.

13. Vorrichtung nach Anspruch 10 bis 12, dadurch gekennzeichnet, daß die erste Kammer der Elektrolysezelle als Koagulationszelle und die zweite Kammer der Elektrolysezelle als Flotationszelle ausgebildet und diesem Mehrzellensystem eine Beruhigungszelle bzw. -kammer nachgeschaltet ist.

14. Vorrichtung nach Anspruch 1 bis 13, dadurch gekennzeichnet, daß die eventuell mit der Schaumphase ausgetragenen freien oder frei gewordenen Tenside und sonstigen Lösemittelbestandteile mittels Ultrafiltration oder Feinfiltration der Schaumphase wieder entzogen und der Stammlösung wieder zugeführt werden.

## Claims

1. A process for the regeneration of neutral to alkaline cleaning and degreasing baths in an electrolytic cell powered by direct current, characterized in that soaps and emulsified components of the baths are coagulated and flotated in a cell having at least one package of stable electrodes, said package of stable electrodes having positioned therein one or more metal inlays being soluble due to influence, in the neutral to alkaline range with a current consumption of 0.1 to 4 $Ah/dm^3$ and a correspondingly matched and sufficient dwell time, and that formed aggregates and agglomerates are filtered off, if necessary.

2. A process according to claim 1, characterized in that the coagulation is supported by an interposed soluble metal inlay within the packages of electrodes due to the precipitated amount of the coagulation agent.

3. A process according to claim 1 or 2, characterized in that coagulation and flotation are carried out at pH-values in the range of 6.5 to 12.6, a current consumption of 0.1 to 4 $Ah/dm^3$ and a dwell time of 2 to 500 min, preferably of 5 to 360 min.

4. A process according to claims 1 to 3, characterized in that at least one metal forming a hydroxide, especially an aluminium plate or iron plate, is used as metal inlay within the package of stable electrodes.

5. A process according to claims 1 to 4, characterized in that the regeneration is carried out at pH-values in the range of 8.5 to 10 and a dwell time of 5 to 120 min with a current consumption of 0.1 to 2 $Ah/dm^3$.

6. A process according to claims 1 to 5, characterized in that the surface ratio of stable electrodes to soluble metal inlay is 1 : 0.05 to 1 : 100, preferably 1 : 1 to 1 : 20.

7. A process according to claims 1 to 6, characterized in that the ratio of the liquid content in the electrolytic cell to that in the cleaning and degreasing device is 1 : 0.5 to 1 : 100, preferably 1 : 5 to 1 : 60, especially 1 : 20.

8. A process according to claims 1 to 7, characterized in that the direction of the direct current is changed every 5 to 3600 seconds.

9. A process according to claims 1 to 8, characterized in that when the package of electrodes comprising the metal inlay is installed directly into a cleaning and degreasing device, the ratio of the opposing electrode surfaces to the liquid surface of this device is 1 : 5 to 1 : 100, preferably 1 : 2 to 1 : 20, especially preferred 1 : 10 to 1 : 15.

10. An apparatus for carrying out the process according to claims 1 to 9, substantially characterized by an electrocoagulator (1) comprising integrated or connected in series an electroflotator (2) having positioned therein a package (3) of stable electrodes (4, 5) with interposed metal inlay (6).

11. An apparatus according to claim 10, characterized in that the electrocoagulator (1) and/or the electroflotator (2) is integrated in an reactor (7) having an overflow system (8) and that, if necessary, a filter system is provided for.

12. An apparatus according to claims 10 or 11, characterized by a killing cell positioned after the electrolytic cell.

13. An apparatus according to claims 10 to 12, characterized in that the first chamber of the electrolytic cell is formed as coagulation cell and the second chamber as flotation cell and that a killing cell is positioned after this multi-cell-system.

14. An apparatus according to claims 10 to 13, characterized in that the free or liberated surfactants and other solvent components which are possibly removed with the foam phase are removed from the foam phase by ultrafiltration or polishing filtration and are then added to the stock solution again.

**Revendications**

1. Procédé de régénération de bains de nettoyage et de dégraissage neutres à alcalins dans une cellule d'électrolyse fonctionnant sous courant continu, caractérisé en ce que les savons et les composants émulsionnés des bains sont soumis à coagulation et à flottation dans une cellule, avec au moins un paquet d'électrodes durables, où une ou plusieurs fourrures métalliques solubles par influence sont montées à l'intérieur du paquet d'électrodes durables, dans le domaine neutre à alcalin, à une consommation de courant de 0,1 a 4 Ah/dm$^3$ et au cours d'une durée de séjour suffisante concomitamment déterminée, et en ce que l'on sépare éventuellement les corps solides formés par filtration.

2. Procédé suivant la revendication 1, caractérisé en ce que la coagulation est soutenue par une fourrure métallique soluble intercalaire dans les paquets des électrodes par suite de l'élévation de la proportion séparée de l'agent de coagulation.

3 Procédé suivant la revendication 1 ou 2, caractérisé en ce que l'on opère la coagulation et la flottation à des valeurs de pH qui se situent dans la plage de 6,5 à 12,6, à une consommation de courant de 0,1 à 4 Ah/dm$^3$ et à une durée de séjour de 2 à 500 min., de préférence de 5 à 360 min.

4 Procédé suivant les revendications 1 à 3, caractérisé en ce qu'à titre de fourrure métallique dans le paquet d'électrodes durables, on utilise au moins un métal engendrant un hydroxyde, plus particulièrement une plaque d'aluminium ou une plaque de fer.

5. Procédé suivant les revendications 1 à 4, caractérisé en ce que l'on entreprend la régénération à des valeurs de pH qui varient de 8,5 à 10 et pendant une durée de séjour de 5 à 120 min pour une consommation de courant de 0,1 à 2 Ah/dm$^3$.

6. Procédé suivant les revendications 1 à 5, caractérisé en ce que le rapport surfacique des électrodes durables à la fourrure métallique soluble fluctue de 1 : 0,05 à 1 : 100, de préférence de 1 : 1 à 1 : 20.

7. Procédé suivant les revendications 1 à 6, caractérisé en ce que le rapport de la teneur en liquide de la cellule d'électrolyse à la teneur en liquide de l'installation de nettoyage et de dégraissage varie de 1 : 0,5 à 1 : 100, de préférence de 1 : 5 à 1 : 60 , et est plus particulièrement de 1 : 20.

8. Procédé suivant les revendications 1 à 7, caractérisé en ce que l'on travaille avec une variation temporaire de la direction du courant continu de 5 à 3600 secondes.

9. Procédé suivant les revendications 1 à 8, caractérisé en ce que, lors de l'incorporation directe du paquet d'électrodes comportant la fourrure métallique dans une installation de nettoyage et de dégraissage, le rapport des surfaces d'électrodes qui se font mutuellement face à la surface du liquide de cette installation , varie de 1 : 0,5 à 1 : 100, de préférence de 1 : 2 à 1 : 20, plus particulièrement de 1 : 10 à 1 : 15.

10. Installation pour la mise en oeuvre du procédé suivant les revendications 1 à 9, caractérisée, pour l'essentiel, par une cellule d'électrocoagulation (1) avec une cellule d'électroflottation (2) intégrée ou montée en aval, comportant le paquet (3) y agencé des électrodes durables (4, 5) avec fourrure métallique intercalaire (6).

11. Installation suivant la revendication 10, caractérisée en ce que la cellule d'électrocoagulation (1) et/ou la cellule d'électroflottation (2) est intégrée dans un réacteur (7) avec système de débordement (8) et en ce qu'un système de filtration est éventuellement raccordé en aval.

12. Installation suivant la revendication 10 ou 11, caractérisée en ce qu'une cellule de repos est raccordée en aval de la cellule d'électrolyse.

13. Installation suivant les revendications 10 à 12, caractérisée en ce que la première chambre de la cellule d'électrolyse est réalisée sous forme de cellule de coagulation et la seconde chambre de la cellule d'électrolyse est réalisée sous forme de cellule de flottation et qu'en aval de ce système à cellules multiples est raccordée une chambre ou cellule de repos.

14. Installation suivant les revendications 11 à 13, caractérisée en ce que les divers constituants solvants et les produits tensioactifs évacués avec la phase mousse, libres ou devenus libres , sont reprélevés de la phase mousse par ultrafiltration ou filtration fine et renvoyés à la solution de départ.

FIG.1

FIG.2

1

FIG.3

1

2

II

II

4

3

*

FIG.4

4

3

1

2

FIG.5

M

12

10

Fig.6